# EUROPEAN PATENT SPECIFICATION

(11) **EP 4 366 420 B1**
(45) Date of publication and mention of the grant of the patent: **16.09.2026**
(21) Application number: 22833131.0
(22) Date of filing: 28.06.2022
(51) Int. Cl.: H04W 72/04, H04W 76/15, H04W 80/02, H04W 16/32, H04W 76/11

(54) **COMMUNICATION DEVICE, MASTER NODE AND COMMUNICATION CONTROL METHOD**
KOMMUNIKATIONSVORRICHTUNG, MASTERKNOTEN UND KOMMUNIKATIONSSTEUERUNGSVERFAHREN
DISPOSITIF DE COMMUNICATION, NOEUD MAÎTRE ET PROCÉDÉ DE COMMANDE DE COMMUNICATION

(30) Priority: 29.06.2021 JP 2021107712
(43) Date of publication of application: 08.05.2024
(73) Proprietor: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: MAEMOTO, Daiki, Kariya- city, Aichi 4488661 (JP); TAKAHASHI, Hideaki, Kariya- city, Aichi 4488661 (JP)
(74) Representative: TBK
(86) International application number: PCT/JP2022/025656
(87) International publication number: WO 2023/276984

(56) References cited:
- US-A1- 2021 144 583
- "3rd Generation Partnership Project; Technical Specification Group Radio Access Network; NR; Radio Resource Control (RRC) protocol specification (Release 16)", 3 April 2020 (2020-04-03), XP051868436, Retrieved from the Internet <URL:https://ftp.3gpp.org/tsg_ran/WG2_RL2/Specifications/202003_draft_specs_after_RAN_87/Draft_38331-g00_v2.docx> [retrieved on 20200403]
- "3rd Generation Partnership Project; Technical Specification Group Radio Access Network; NR; Packet Data Convergence Protocol (PDCP) specification (Release 16)", 24 July 2020 (2020-07-24), XP052300337, Retrieved from the Internet <URL:https://ftp.3gpp.org/3guInternal/3GPP_ultimate_versions_to_be_transposed/sentToDpc/38323-g10.zip 38323-g10.docx> [retrieved on 20200724]
- "3rd Generation Partnership Project; Technical Specification Group Radio Access Network; NR; Radio Resource Control (RRC) protocol specification (Release 16)", 3GPP STANDARD; TECHNICAL SPECIFICATION; 3GPP TS 38.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V16.4.1, 30 March 2021 (2021-03-30), Mobile Competence Centre ; 650, route des Lucioles ; F-06921 Sophia-Antipolis Cedex ; France , pages 1 - 949, XP052000246
- "3rd Generation Partnership Project; Technical Specification Group Radio Access Network; NR; Packet Data Convergence Protocol (PDCP) specification (Release 16)", 3GPP STANDARD; TECHNICAL SPECIFICATION; 3GPP TS 38.323, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V16.3.0, 29 March 2021 (2021-03-29), Mobile Competence Centre ; 650, route des Lucioles ; F-06921 Sophia-Antipolis Cedex ; France , pages 1 - 40, XP052000123

## Description

### Cross-Reference to Related Applications

The present application is based on and claims the benefit of priority of Japanese Patent Application No. 2021-107712, filed on June 29, 2021, the entire contents of which are incorporated herein by reference.

### Technical Field

The present disclosure relates to a communication apparatus, a master node, and a communication control method used in a mobile communication system.

### Background Art

In Third Generation Partnership Project (3GPP) (registered trademark; the same applies hereinafter), which is a mobile communication system standardization project, dual connectivity (DC) is introduced.

In the dual connectivity, only one base station (hereinafter, it may be referred to as a "master base station" or a "master node") among a plurality of base stations establishes radio resource control (RRC) connection with a communication apparatus (user equipment (UE)). On the other hand, among the plurality of base stations, another base station other than the master base station (hereinafter, it may be referred to as a "secondary base station" or a "secondary node") does not establish the RRC connection with the communication apparatus, and provides additional radio resources to the communication apparatus.

In the dual connectivity, the communication apparatus transmits and receives user data using the radio resources of the secondary node while transmitting and receiving user data using the radio resources of the master node. As a result, the communication apparatus can improve the throughput.

Note that, in 3GPP, multi-radio DC (MR-DC) is introduced. The MR-DC is dual connectivity between a long term evolution (LTE) node and a new radio (NR) node, or dual connectivity between NR nodes.

On the other hand, power consumption of the communication apparatus that performs radio communication by the dual connectivity is larger than that in a case of performing the radio communication with one base station.

Therefore, in 3GPP, technology for deactivating a secondary cell group (SCG) managed by the secondary node according to a situation has been studied.

For the deactivation of the SCG, there are, for example, the following agreements in 3GPP. That is, only the master node may generate an RRC message related to activation or deactivation of the SCG, and/or the communication apparatus may indicate, to the master node, that the communication apparatus desires to deactivate the SCG.

Further, items currently proposed in 3GPP include, for example, the following items. That is, the communication apparatus transmits uplink data by a master cell group (MCG) leg regardless of a primary path in a case of having uplink data to be transmitted by a split bearer, during the deactivation of the SCG.

### Citation List

### Non Patent Literature

Non Patent Literature 1: 3GPP TS 37.340 V16.5.0
Non Patent Literature 2: 3GPP Contribution R2-2104315
Non Patent Literature 3: 3GPP Contribution R2-2103977
Non Patent Literature 4: 3GPP Contribution R2-2103979
Further prior art can be found in document "'3rd Generation Partnership Project; Technical Specification Group Radio Access Network; NR; Radio Resource Control (RRC) protocol specification (Release 16)', 3GPP DRAFT; DRAFT_38331-G00_V2, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, 3 April 2020 (2020-04-03), XP051868436", disclosing specification on the Radio Resource Control (RRC) protocol for the radio interface between UE and NG-RAN, and discussing RRC procedures, including UE state transitions.
Further prior art can be found in document "'3rd Generation Partnership Project; Technical Specification Group Radio Access Network; NR; Packet Data Convergence Protocol (PDCP) specification (Release 16)', 3GPP DRAFT; 38323-G10, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, 24 July 2020 (2020-07-24), XP052300337", disclosing specification on the Packet Data Convergence Protocol (PDCP), including PDCP related data transfer. Further prior art can be found in document US 2021 / 144 583 A1, disclosing a base station, a user equipment, and a related method, wherein a method in a user equipment operating in a carrier aggregation mode comprises: receiving a Media Access Control (MAC) control element (CE) used for deactivating packet duplication, transmitting data from a Packet Data Convergence Protocol (PDCP) entity to a Radio Link Control (RLC) entity, and transmitting, at a MAC entity, the data only by a cell or cell group associated with the RLC entity in a packet duplication activated state, or by a cell or cell group selected from a set of cells or cell groups pre-configured for the UE.

### Summary of Invention

With respect to the proposed items described above, how the communication apparatus transmits the uplink data to the MCG side has not been agreed in 3GPP.

For this reason, when the SCG is deactivated in a state in which the split bearer capable of transmitting the uplink data to both the MCG and the SCG is established in the communication apparatus, the communication apparatus may not appropriately transmit the uplink data to the MCG side.

Therefore, an object of the present disclosure is to provide a communication apparatus, a master node, and a communication control method capable of appropriately transmitting data to an MCG side.

A communication apparatus according to a first feature is connected to a master node associated with a master cell group (MCG) and connected to a secondary node associated with a secondary cell group (SCG) using dual connectivity. The communication apparatus comprises a controller including a packet data convergence protocol (PDCP) entity associated with a split bearer, a primary radio link control (RLC) entity associated with the PDCP entity, and a secondary RLC entity associated with the PDCP entity; and a receiver configured to receive a radio resource control (RRC) message including information for configuring an ID of a cell group associated with the primary RLC entity, the ID of the cell group associated with the primary RLC entity being corresponding to the MCG, in a case where the SCG is deactivated. The PDCP entity outputs a PDCP protocol data unit (PDU) to the primary RLC entity in a case where a total volume of a PDCP data volume and an RLC data volume pending for initial transmission is smaller than a threshold.

A master node according to a second feature is associated with a master cell group (MCG) and is connected to a secondary node associated with a secondary cell group (SCG) and a communication apparatus. The communication apparatus using dual connectivity. The master node comprises a controller including a packet data convergence protocol (PDCP) entity associated with a split bearer, a primary radio link control (RLC) entity associated with the PDCP entity, and a secondary RLC entity associated with the PDCP entity, and a transmitter configured to transmit, to the communication apparatus, a radio resource control (RRC) message including information for configuring an ID of a cell group associated with the primary RLC entity, the ID of the cell group associated with the primary RLC entity being corresponding to the MCG, in a case where the SCG is deactivated.

A communication control method according to a third feature in a communication apparatus. The communication apparatus is connected to a master node associated with a master cell group (MCG) and connected to a secondary node associated with a secondary cell group (SCG) using dual connectivity, and includes a packet data convergence protocol (PDCP) entity, a primary radio link control (RLC) entity associated with the PDCP entity, and a secondary RLC entity associated with the PDCP entity. The communication control method comprises the steps of: receiving a radio resource control (RRC) message including information for configuring an ID of a cell group associated with the primary RLC entity, the ID of the cell group associated with the primary RLC entity being corresponding to the MCG, in a case where the SCG is deactivated; and causing the PDCP entity to output a PDCP protocol data unit (PDU) to the primary RLC entity in a case where a total volume of a PDCP data volume and an RLC data volume pending for initial transmission is smaller than a threshold.

### Brief Description of Drawings

The above and other objects, features, and advantages of the present disclosure will become more apparent from the following detailed description with reference to the accompanying drawings. The drawings are as follows.
Fig. 1 is a diagram illustrating a configuration example of a mobile communication system according to an embodiment of the present disclosure.
Fig. 2 is a diagram illustrating a configuration example of a protocol stack according to the embodiment of the present disclosure.
Fig. 3 is a diagram illustrating a configuration example of a protocol stack according to the embodiment of the present disclosure.
Fig. 4 is a diagram illustrating a configuration example of a UE according to the embodiment of the present disclosure.
Fig. 5 is a diagram illustrating a configuration example of a base station according to the embodiment of the present disclosure.
Fig. 6 is a diagram illustrating an example of a split bearer according to the embodiment of the present disclosure.
Fig. 7 is a diagram illustrating an operation example according to the embodiment of the present disclosure.
Fig. 8 is a diagram illustrating an operation example in a specification according to the embodiment of the present disclosure.
Fig. 9 is a diagram illustrating an operation example in a specification according to the embodiment of the present disclosure.
Fig. 10 is a diagram illustrating an example of a split bearer according to the embodiment of the present disclosure.
Fig. 11 is a diagram illustrating an operation example according to the embodiment of the present disclosure.
Fig. 12 is a diagram illustrating an example of information included in a message according to the embodiment of the present disclosure.
Fig. 13 is a diagram illustrating an example of information included in a message according to the embodiment of the present disclosure.
Fig. 14 is a diagram illustrating an example of information included in a message according to the embodiment of the present disclosure.
Fig. 15 is a diagram illustrating an example of information included in a message according to the embodiment of the present disclosure.

### Description of Embodiments

Hereinafter, embodiments of the present disclosure will be described in detail with reference to the drawings. Note that, in the present specification and the drawings, components that can be described in a similar manner are denoted by the same or similar reference numerals, and redundant description can be omitted.

### [First Embodiment]

### (1.1) Configuration example of mobile communication system

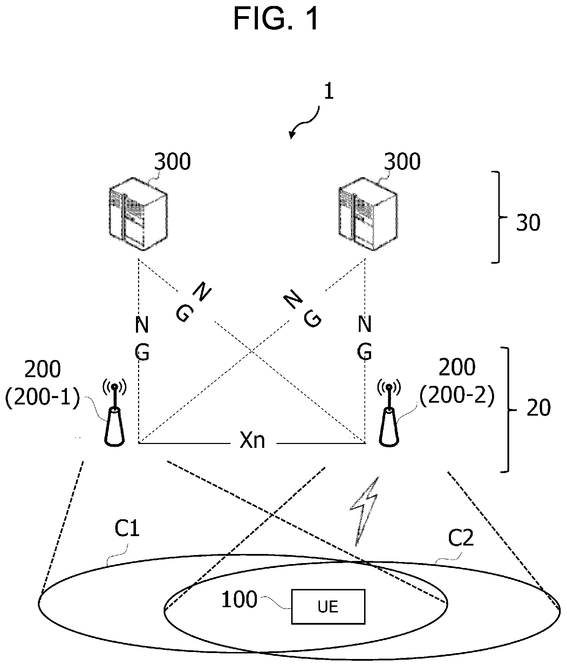

Fig. 1 is a configuration example of a mobile communication system 1 according to an embodiment of the present disclosure. The mobile communication system 1 is, for example, a 5th generation (5G) system of 3GPP. In the mobile communication system 1, the LTE system and the 5G system may be mixed. Further, in the mobile communication system 1, the 5G system and another generation (for example, the sixth generation) may be mixed. The mobile communication system 1 may include a system conforming to a standard other than 3GPP.

As illustrated in Fig. 1, the mobile communication system 1 includes a radio access network (hereinafter, it may be referred to as a next generation radio access network (NG-RAN)) 20, a core network (hereinafter, it may be referred to as a 5G core network (5GC)) 30, and a user equipment (hereinafter, it may be referred to as a user equipment (UE))100.

The NG-RAN 20 includes a base station (gNB) 200, which is a node of a radio access network.

The base station 200 is a radio communication apparatus that performs radio communication with the UE 100. The base station 200 manages one or a plurality of cells. The base station 200 performs radio communication with the UE 100 that has established RRC connection in its cell. The base station 200 has a radio resource management function, a routing function of user data (hereinafter, it may be simply referred to as "data"), a measurement control function for mobility control and scheduling, and the like.

Note that the "cell" is used as a term indicating a minimum unit of a radio communication area. The "cell" may be used as a term representing a function of performing radio communication with the UE 100 or a term representing a resource. One cell belongs to one carrier frequency. In Fig. 1, a base station 200-1 manages a cell C1, and a base station 200-2 manages a cell C2.

The 5GC 30 includes a core network apparatus 300.

The core network apparatus 300 includes an apparatus corresponding to a control plane. In this case, the core network apparatus 300 can perform various types of mobility control on the UE 100 by communicating with the UE 100 using non-access stratum (NAS) signaling. The core network apparatus 300 may be an access management function (AMF) or a mobility management entity (MME).

Further, the core network apparatus 300 includes an apparatus corresponding to a user plane. In this case, the core network apparatus 300 performs transfer control of data of the UE 100. The core network apparatus 300 may be a user plane function (UPF) or a serving gateway (S-GW).

As illustrated in Fig. 1, each of the base stations 200-1 and 200-2 is mutually connected to the 5GC 30 via an interface called an NG interface. In addition, the base stations 200-1 and 200-2 are mutually connected via an interface called an Xn interface.

The UE 100 is, for example, a mobile radio communication apparatus such as a smartphone, a tablet terminal, a personal computer, a communication module, or a communication card. The UE 100 may be a vehicle (for example, a car, a train, or the like) or an apparatus provided in the vehicle. Further, the UE 100 may be a transport body (for example, a ship, an airplane, or the like) or an apparatus provided in the transport body. Furthermore, the UE 100 may be a sensor or an apparatus provided in the sensor. Note that the UE 100 may be used as another name such as a mobile station, a mobile terminal, a mobile apparatus, a mobile unit, a subscriber station, a subscriber terminal, a subscriber apparatus, a remote station, a remote terminal, a remote apparatus, or a remote unit.

Note that Fig. 1 illustrates an example in which the UE 100 exists in both the cell C1 managed by the base station 200-1 and the cell C2 managed by the base station 200-2.

### (1.2) Configuration example of protocol stack

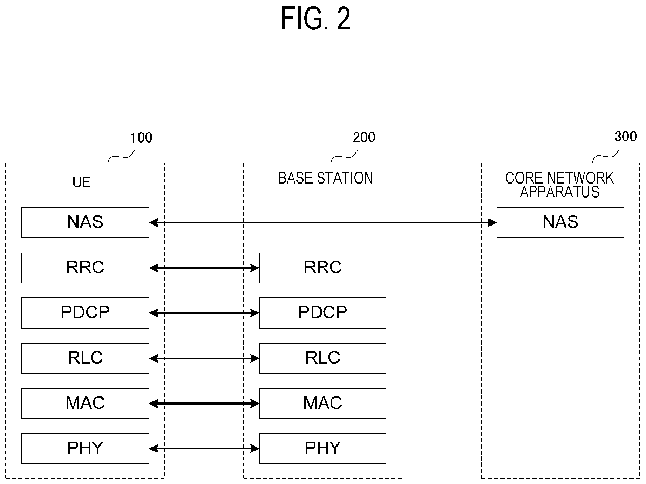

Fig. 2 is a diagram illustrating a configuration example of a protocol stack according to the embodiment of the present disclosure. Fig. 2 illustrates a configuration example of a protocol stack related to the control plane.

As illustrated in Fig. 2, a physical (PHY) layer, a media access control (MAC) layer, a radio link control (RLC) layer, a packet data convergence protocol (PDCP) layer, and an RRC layer are included in the UE 100 and the base station 200 as protocols related to the control plane. Further, an NAS layer is included in the UE 100 and the core network apparatus 300.

The PHY layer performs encoding and decoding, modulation and demodulation, antenna mapping and demapping, and resource mapping and demapping. Data and control information are transmitted between the PHY layer of the UE 100 and the PHY layer of the base station 200 via a physical channel.

The MAC layer performs priority control of data, retransmission processing by hybrid automatic repeat request (hybrid ARQ (HARQ)), and a random access procedure. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size and modulation and encoding scheme) and allocated resource blocks.

The RLC layer transmits data to the RLC layer on a reception side using functions of the MAC layer and the PHY layer. Data and control information are transmitted between the RLC layer of the UE 100 and the RLC layer of the base station 200 via a logical channel.

The PDCP layer performs header compression and decompression and encryption and decryption. Data and control information are transmitted between the PDCP layer of the UE 100 and the PDCP layer of the base station 200 via a radio bearer.

The RRC layer controls a logical channel, a transport channel, and a physical channel according to establishment, reestablishment, and release of the radio bearer. RRC signaling for various configurations is transmitted between the RRC layer of the UE 100 and the RRC layer of the base station 200. When there is RRC connection with the base station 200, the UE 100 is in an RRC connected state. When there is no RRC connection with the base station 200, the UE 100 is in an RRC idle state.

The NAS layer performs session management, mobility management, and the like. NAS signaling is transmitted between the NAS layer of the UE 100 and the NAS layer of the core network apparatus 300.

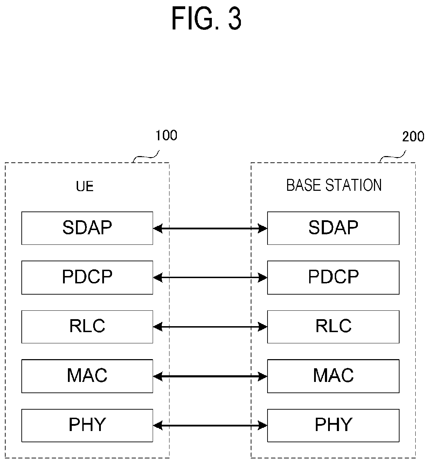

Fig. 3 is a diagram illustrating a configuration example of a protocol stack according to the embodiment of the present disclosure. Fig. 3 illustrates a configuration example of a protocol stack related to the user plane.

As illustrated in Fig. 3, a PHY layer, a MAC layer, an RLC layer, a PDCP layer, and a service data protocol (SDAP) layer are included in the UE 100 and the base station 200 as protocols related to the user plane.

The SDAP layer maps a quality of service (QoS) flow and a data radio bearer, and assigns a QoS flow identification (ID) in both uplink (UL) and downlink (DL). Note that, in a case of the LTE system, the SDAP layer may not exist.

### (1.3) Dual connectivity

The UE 100 can use resources provided from two different nodes connected by a non-ideal backhaul. In this case, one of the nodes becomes a master node (MN) that manages a master cell group (hereinafter, it may be referred to as the "MCG"). The other node becomes a secondary node (SN) that manages a secondary cell group (hereinafter, it may be referred to as the "SCG"). The master node and the secondary node are connected via the network interface (Xn interface). At least the master node is connected to the core network.

The master node provides a single control plane toward the core network (for example, the 5GC 30). The master node may be referred to as a master evolved node B (eNB), a master new generation-eNB (ng-eNB), or a master gNB.

The secondary node provides additional radio resources to the UE 100 without control plane connection to the core network. The secondary node may be referred to as an en-gNB, a secondary ng-eNB, or a secondary gNB.

Here, the master node and the secondary node are logical entities. In the present embodiment, it is assumed that the master node corresponds to the base station 200-1, and the secondary node corresponds to the base station 200-2, in the following description.

The MCG is a cell group of a serving cell associated with the master node. The MCG has a primary cell (Sp cell or P cell) and has optionally one or more secondary cells (S cells).

The SCG is a group of serving cells associated with the secondary node. The SCG has a primary cell (Sp cell or PS cell) and has optionally one or more secondary cells (S cells). The Sp cell is a primary cell in the MCG and is also a primary cell in the SCG.

The UE 100 can be connected to the secondary node in a case of managing the SCG while being connected to the master node that manages the MCG. In this case, the UE 100 is simultaneously connected to each node to perform radio communication.

Note that the configuration of the dual connectivity is performed by the master node transmitting a predetermined message (for example, an SN Addition Request message) to the secondary node, and transmitting an RRC message (for example, an RRC Reconfiguration message) to the UE 100.

Hereinafter, the base station 200-1 may be referred to as the master node 200-1 or the master base station 200-1. Furthermore, hereinafter, the base station 200-2 may be referred to as the secondary node 200-2 or the secondary base station 200-2.

### (1.4) Deactivation of SCG

Next, deactivation of the SCG will be described.

In 3GPP, the deactivation of the SCG is considered in order to suppress the power consumption of the UE 100. When the SCG is deactivated, the UE 100 deactivates all cells (PSCell and SCell) belonging to the SCG. The UE 100 does not report channel status informationchannel state information (CSI) for the cells belonging to the deactivated SCG, and also does not monitor a physical downlink control channel (PDCCH). Further, the UE 100 does not transmit a random access channel (RACH), a sounding reference signal (SRS), and/or a UL-shared channel (UL-SCH) to the cell. As a result, the power consumption of the UE 100 is suppressed.

The UE 100 deactivates the SCG by any one of the following methods.

Method 1: The UE 100 deactivates the SCG in response to receiving an indication to deactivate the SCG from the master node (base station 200-1). The indication is transmitted by any one of signaling of the RRC layer (RRC message), signaling of the MAC layer (MAC CE), and signaling of the PHY layer (PDCCH).

Method 2: The UE 100 deactivates the SCG in response to expiration of a timer for deactivating the SCG.

### (1.5) Split bearer

In MR-DC, there are three bearer types of an MCG bearer, an SCG bearer, and a split bearer from the viewpoint of the UE 100. The MCG bearer is a bearer established between the UE 100 and the master node 200-1. In addition, the SCG bearer is a bearer established between the UE 100 and the secondary node 200-2. The split bearer is a bearer established between the UE 100 and the master node 200-1, and is established to be transmitted from the UE 100 to the master node 200-1 via the secondary node 200-2. The split bearer is a radio bearer having both the RLC of the MCG and the RLC of the SCG in the MR-DC.

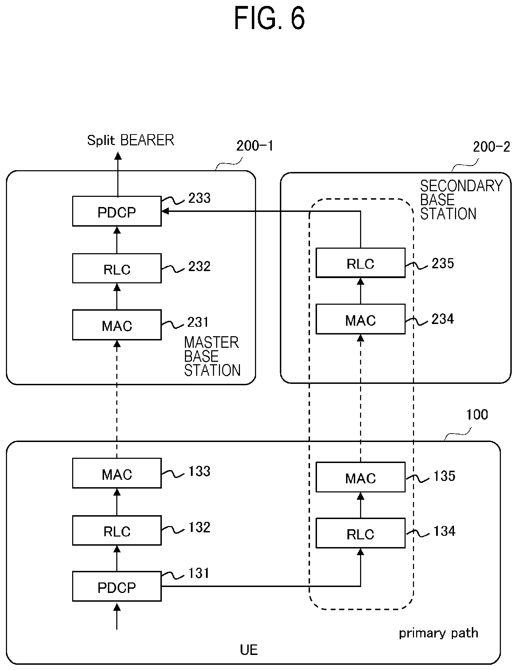

Fig. 6 is a diagram illustrating an example of a split bearer for UL data. As will be described in detail below, as illustrated in Fig. 6, when the split bearer is established, a PDCP entity 131 of the UE 100 is associated with two RLC entities of a first RLC entity 132 and a second RLC entity 134.

For the UL data, the PDCP entity 131 outputs a first PDCP protocol data unit (PDU) (or a PDCP PDU corresponding to first data) to the first RLC entity 132 corresponding to the master node 200-1. In addition, the PDCP entity 131 outputs a second PDCP PDU (or a PDCP PDU corresponding to second data) to the second RLC entity 134 corresponding to the secondary node 200-2.

The first data is output to a PDCP entity 233 via the first RLC entity 132, a first MAC entity 133, a MAC entity 231 of the master node 200-1, and an RLC entity 232. On the other hand, the second data is output to the PDCP entity 233 via the second RLC entity 134, a second MAC entity 135, a MAC entity 234 of the secondary node 200-2, and an RLC entity 235.

As described above, with the split bearer, the UE 100 is configured with two branched logical data paths, and can transmit data to the master node 200-1 and the secondary node 200-2 by using the two bearers. Specifically, when a total volume of a PDCP data volume and an RLC data volume pending for initial transmission is equal to or more than a threshold (ul-DataSplitTheshold), the PDCP entity 233 outputs the PDCP PDU to either the primary RLC entity (for example, the first RLC entity 132) or the split secondary RLC entity (for example, the second RLC entity 134).

Here, the PDCP data volume is a data volume available for transmission in the PDCP entity 131.

Note that the split bearer can be established in each of the nodes 200-1 and 200-2 by negotiation between the master node 200-1 and the secondary node 200-2. In addition, the master node 200-1 transmits an RRC message or the like to the UE 100, so that the split bearer can be established in the UE 100.

### (1.6) Primary path

The master node 200-1 can configure a primary path for the UE 100 using the RRC message. The primary path is a path indicated by a cell group ID and a logical channel ID (LCID) of the primary RLC entity that can respond to the split bearer operation. The master node 200-1 uses the RRC message to indicate the cell group ID and the LCID of the primary RLC entity. As a result, the UE 100 can configure the side of the primary RLC entity as the primary path. The example of Fig. 6 illustrates an example in which the second RLC entity 134 is configured as the primary RLC entity and the primary path is configured on the SCG side. In this way, the master node 200-1 can configure the primary path on the SCG side.

Further, the master node 200-1 can also configure a split secondary path other than the primary path for the UE 100 using the RRC message. The split secondary path is a path indicated by the LCID of the split secondary RLC entity that is an RLC entity other than the primary RLC entity. A path other than the primary path may be the split secondary path. The master node 200-1 uses the RRC message to indicate the LCID of the split secondary RLC entity. As a result, the UE 100 can configure the side of the split secondary RLC entity as the split secondary path. The example of Fig. 6 illustrates an example in which the first RLC entity 132 is configured as the split secondary RLC entity, and the split secondary path is configured on the MCG side. In this way, the master node 200-1 can configure the split secondary path on the MCG side.

For example, when the data volume is less than the threshold, the PDCP entity 131 of the UE 100 outputs the PDCP PDU to the primary RLC entity (the second RLC entity 134 in the example of Fig. 6) on the side configured as the primary path. When the data volume exceeds the threshold, the PDCP entity 131 outputs the PDCP PDU to the split secondary RLC entity (the first RLC entity 132 in the example of Fig. 6) on the side configured as a path other than the primary path, that is, the split secondary path.

### (1.7) Configuration example of UE

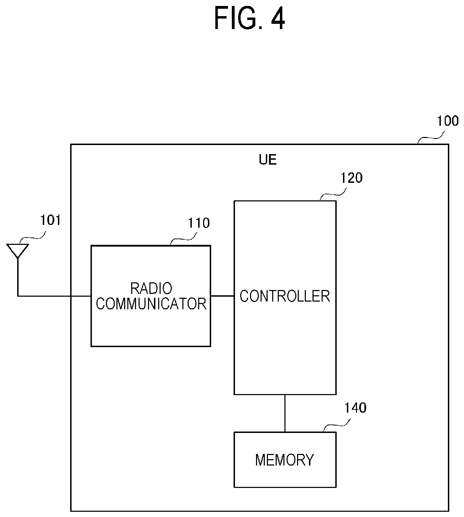

Fig. 4 is a diagram illustrating a configuration example of the UE 100. As illustrated in Fig. 4, the UE 100 has an antenna 101, a radio communicator 120, a controller 130, and a memory 140.

The antenna 101 receives a radio signal transmitted from the base station 200 and outputs the received radio signal to the radio communicator 120. In addition, the antenna 101 transmits the radio signal output from the radio communicator 120 to the base station 200.

The radio communicator 120 performs radio communication with the base station 200 via the antenna 101 under the control of the controller 130. For example, the radio communicator 120 converts (down-converts) the radio signal output from the antenna 101 into a baseband signal (received signal), and outputs the converted baseband signal to the controller 130. Further, for example, the radio communicator 120 converts (up-converts) the baseband signal (transmission signal) output from the controller 130 into a radio signal, and outputs the converted radio signal to the antenna 101.

The controller 130 performs various types of control in the UE 100. The controller 130 controls radio communication with the base station 200 or radio communication with another UE via the radio communicator 120 or the like, for example. The controller 130 may perform various operations by processing the received signal output from the radio communicator 120. Further, the controller 130 may perform various operations and output a transmission signal to the radio communicator 120. The operation of the UE 100 to be described later may be an operation by the controller 130.

The memory 140 stores various types of information and the like under the control of the controller 130. The memory 140 may function as a working memory of the controller 130. Further, the memory 140 may store a program. In this case, the controller 130 realizes the operation in the UE 100 by reading and executing the program from the memory 140. The memory 140 may be a read only memory (ROM) or a random access memory (RAM).

### (1.8) Configuration example of base station

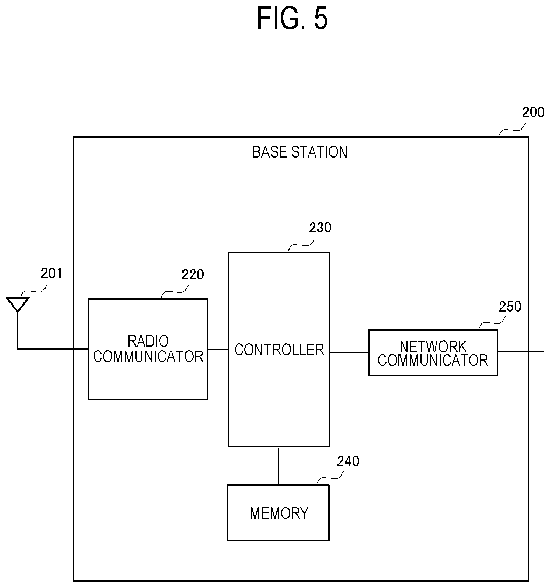

Fig. 5 is a diagram illustrating a configuration example of the base station 200. As illustrated in Fig. 5, the base station 200 has an antenna 201, a radio communicator 220, a controller 230, a memory 240, and a network communicator 250.

The antenna 201 receives the radio signal transmitted from the UE 100 and outputs the received radio signal to the radio communicator 220. In addition, the antenna 201 transmits the radio signal output from the radio communicator 220 to the UE 100.

The radio communicator 220 performs radio communication with the UE 100 via the antenna 201 under the control of the controller 230. For example, the radio communicator 220 converts (down-converts) the radio signal output from the antenna 201 into a baseband signal (received signal), and outputs the converted baseband signal to the controller 230. Further, for example, the radio communicator 220 converts (up-converts) the baseband signal (transmission signal) output from the controller 230 into a radio signal, and outputs the converted radio signal to the antenna 201.

The controller 230 performs various types of control in the base station 200. The controller 230 controls radio communication with the UE 100 via the radio communicator 220 or the like, for example. The controller 230 may perform various operations by processing the received signal output from the radio communicator 220. Further, the controller 230 may perform various operations and output a transmission signal to the radio communicator 220.

Further, the controller 230 controls communication with the core network apparatus 300 or another base station via the network communicator 250. The controller 230 receives a message or the like transmitted from the core network apparatus 300 or another base station via the network communicator 250, and performs various operations. Further, the controller 230 can transmit various messages from the network communicator 250 to the core network apparatus 300 or another base station by performing various operations and instructing the network communicator 250 to generate and transmit messages.

The operation of the base station 200 described later may be an operation by the controller 230.

The memory 240 stores various types of information and the like under the control of the controller 230. The memory 240 may function as a working memory of the controller 230. Further, the memory 240 may store a program. In this case, the controller 230 realizes the operation in the base station 200 by reading and executing the program from the memory 240. The memory 240 may be a read only memory (ROM) or a random access memory (RAM).

The network communicator 250 can communicate with another base station. In this case, the network communicator 250 communicates with another base station using a message of the Xn interface. Further, the network communicator 250 can communicate with each node of the core network 30. In this case, the network communicator 250 communicates with each node of the core network 30 using a message of the NG interface.

In the first embodiment, the UE 100 is connected to the master base station 200-1 and the secondary base station 200-2 by using the dual connectivity. The UE 100 has the radio communicator 120 configured to transmit the first data belonging to the split bearer to the master base station 200-1 and transmit the second data belonging to the split bearer to the secondary base station 200-2. In addition, the UE 100 has the controller 130 that has the PDCP entity 131, the first RLC entity 132 associated with the master base station 200-1, and the second RLC entity 134 associated with the secondary base station 200-2. When the secondary cell group managed by the secondary base station 200-2 is deactivated, the PDCP entity 131 outputs the PDCP data volume indicating the data volume available for transmission in the PDCP entity 131 to the first RLC entity 132, and outputs a notification indicating that the PDCP data volume is "0" to the second RLC entity 134. As a result, when the SCG is deactivated in a state where the split bearer is established in the UE 100, the UE 100 can appropriately transmit data to the MCG side. Details will be described in the following first operation example and second operation example.

### (2) Operation example

### (2-1) First operation example

Fig. 6 is a diagram illustrating an establishment example of the split bearer according to the embodiment of the present disclosure. In the example of Fig. 6, it is assumed that the dual connectivity is configured for the UE 100.

As illustrated in Fig. 6, the UE 100 has the PDCP entity 131, the first RLC entity 132, the first MAC entity 133, the second RLC entity 134, and the second MAC entity 135. These entities are included, for example, in the controller 130 of the UE 100.

The master base station 200-1 has the MAC entity 231, the RLC entity 232, and the PDCP entity 233. These entities are included, for example, in the controller 230 of the master base station 200-1.

The secondary base station 200-2 has the MAC entity 234 and the RLC entity 235. These entities are included, for example, in the controller 230 of the secondary base station 200-2.

Here, a path from the PDCP entity 131 to the PDCP entity 233 of the master base station 200-1 via the first RLC entity 132 is configured as the MCG. In addition, in the example of Fig. 6, a path from the PDCP entity 131 to the PDCP entity 233 via the second RLC entity 134 and the RLC entity 235 of the secondary base station 200-2 is configured as the SCG.

The split bearer is also established. Therefore, the UE 100 can transmit the first data belonging to the split bearer to the master base station 200-1 via the MCG. In addition, the UE 100 can transmit the second data belonging to the split bearer to the secondary base station 200-2 via the SCG.

Further, as illustrated in Fig. 6, the primary path is configured on the SCG side.

In the first operation example, in a case where the SCG is deactivated in such a state, the PDCP entity 131 outputs the PDCP data volume to the first RLC entity 132 while maintaining the configuration of the primary path. The PDCP entity 131 outputs a notification indicating that the PDCP data volume is "0" to the second RLC entity 134. Specifically, the PDCP entity 131 outputs the PDCP data volume to the first RLC entity 132 that is not suspended, and outputs a notification indicating that the PDCP data volume is "0" to the suspended second RLC entity 134 because the SCG is deactivated.

The PDCP data volume output from the PDCP entity 131 is output from the first RLC entity 132 to the first MAC entity 133. The first MAC entity 133 generates a buffer status report (BSR) on the basis of the PDCP data volume. The first MAC entity 133 transmits the BSR to the master base station 200-1. The MAC entity 231 of the master base station 200-1 transmits UL grant to the UE 100 on the basis of the BSR by scheduling. The first MAC entity 133 can transmit data to the master base station 200-1 using radio resources allocated by the master base station 200-1 on the basis of the UL grant.

On the other hand, the second RLC entity 134 that has received the notification indicating that the PDCP data volume is "0" does not output the PDCP data volume to the second MAC entity 135 because the SCG is deactivated. Therefore, on the SCG side, the UL grant is not received from the secondary base station 200-2, and the UE 100 cannot transmit data using the SCG.

Note that, in the first operation example, the PDCP entity 131 outputs a PDCP protocol data unit (PDU) to the first RLC entity 132 and does not output the PDCP PDU to the second RLC entity 134.

The first RLC entity 132 converts the PDCP PDU output from the PDCP entity 131 into an RLC PDU and outputs the RLC PDU to the first MAC entity 133. The first MAC entity 133 converts the RLC PDU into a MAC PDU and outputs the MAC PDU to the PHY layer. The PHY layer converts the MAC PDU into a radio signal and transmits the radio signal to the master base station 200-1 using radio resources by the UL grant. As a result, the UE 100 can transmit the UL data to the master base station 200-1.

On the other hand, since the PDCP PDU is not output to the second RLC entity 134, the UE 100 can prevent the UL data from being transmitted to the secondary base station 200-2.

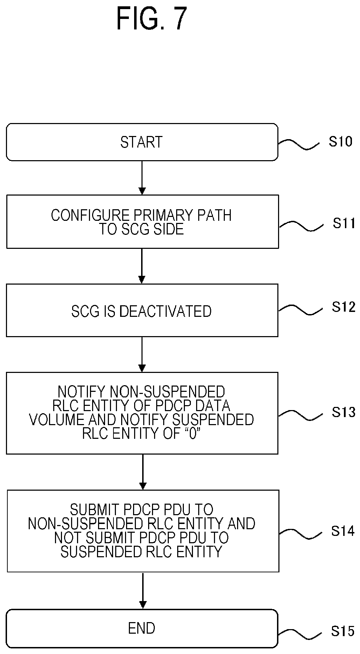

Fig. 7 is a diagram illustrating an operation example according to the embodiment of the present disclosure. It is assumed that the dual connectivity is configured in the UE 100 and the split bearer is also established in the UE 100, before processing of Fig. 7 is initiated.

As illustrated in Fig. 7, in step S10, the mobile communication system 1 initiates the processing.

In step S11, the controller 230 of the master base station 200-1 configures the primary path on the SCG side. By transmitting the RRC message to the UE 100, the controller 230 can configure the primary path on the SCG side for the UE 100.

In step S12, the SCG is deactivated. For example, the controller 230 of the master base station 200-1 detects that the SCG has been deactivated, and transmits the RRC message to the UE 100. As a result, the controller 230 of the master base station 200-1 can notify the UE 100 that the SCG has been deactivated.

In step S13, the PDCP entity 131 of the UE 100 outputs the PDCP data volume to the first RLC entity 132 that is not suspended. In addition, the PDCP entity 131 outputs a notification indicating that the PDCP data volume is "0" to the suspended second RLC entity 134.

In step S14, the PDCP entity 131 of the UE 100 outputs (submits) the PDCP PDU to the first RLC entity 132 that is not suspended. In addition, the PDCP entity 131 does not output the PDCP PDU to the suspended second RLC entity 134.

Then, in step S15, the mobile communication system 1 ends a series of processing.

As described above, in the first operation example, in the case where the dual connectivity is configured, the split bearer is established, and the primary path is configured in the SCG in the mobile communication system 1, when the SCG is deactivated, the PDCP entity 131 performs a predetermined operation.

That is, the PDCP entity 131 outputs the PDCP data volume to the first RLC entity 132 that is not suspended, and outputs a notification indicating that the PDCP data volume is "0" to the suspended second RLC entity 134.

In addition, the PDCP entity 131 outputs the PDCP PDU to the first RLC entity 132 that is not suspended, and does not output the PDCP PDU to the suspended second RLC entity 134.

As a result, when the SCG is deactivated in a state where the split bearer is established in the UE 100, the UE 100 can appropriately transmit data to the MCG side.

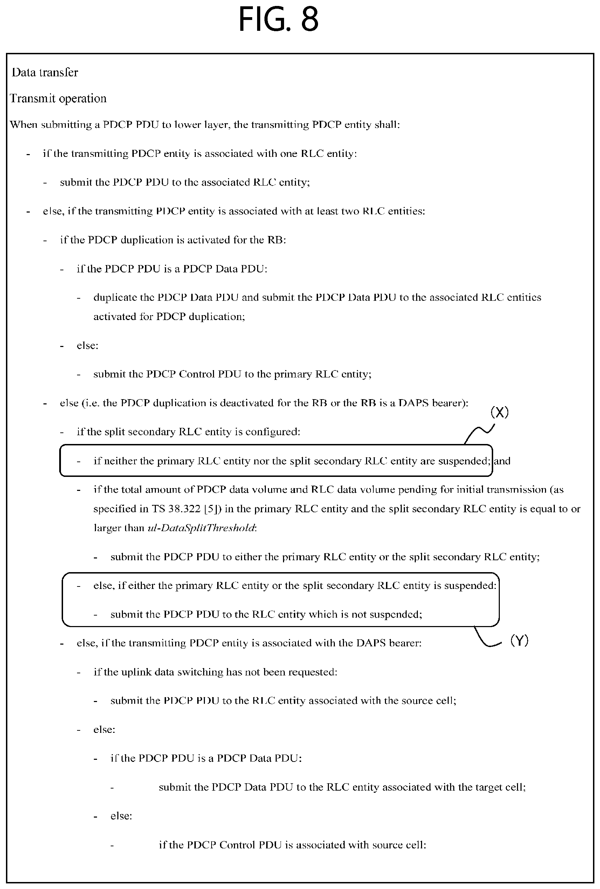

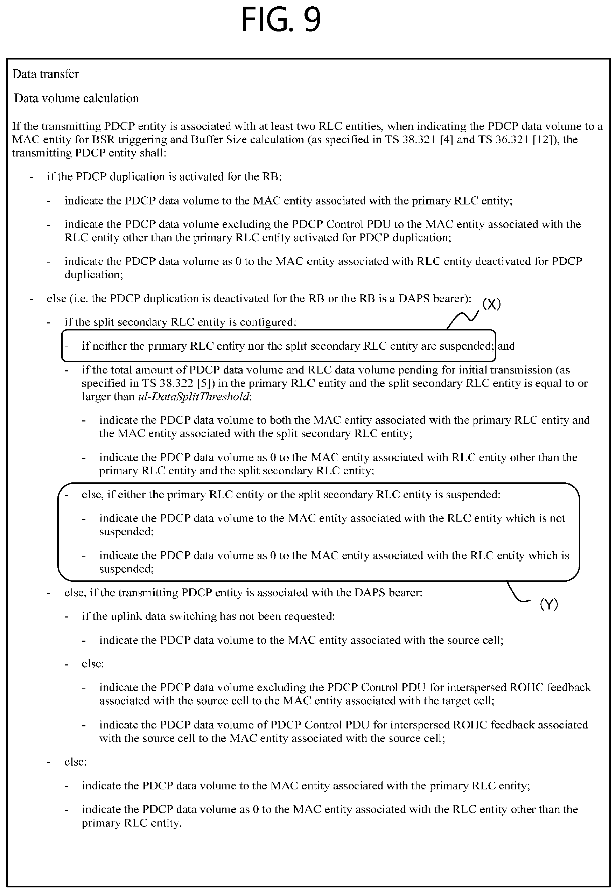

Figs. 8 and 9 are diagrams illustrating an operation example in the specification. Of these, Fig. 8 illustrates a transmission example of the PDCP PDU.

As illustrated in (X) of Fig. 8, when neither the primary RLC entity nor the split secondary RLC entity is suspended, the PDCP PDU is output to any one of the primary RLC entity and the split secondary RLC entity.

In addition, as illustrated in (Y) of Fig. 8, when any one of the primary RLC entity and the split secondary RLC entity is suspended, the PDCP PDU is output to the RLC entity that is not suspended.

In the first operation example, a case where the primary RLC entity is the second RLC entity 134 and the split secondary RLC entity is the first RLC entity 132 due to the configuration of the primary path has been described.

Fig. 9 is a diagram illustrating a transmission example of the PDCP data volume. As illustrated in (X) of Fig. 9, when neither the primary RLC entity nor the split secondary RLC entity is suspended, the PDCP data volume is output to any one of the primary RLC entity and the split secondary RLC entity.

In addition, as illustrated in (Y) of Fig. 9, when any one of the primary RLC entity and the split secondary RLC entity is suspended, the PDCP data volume is output to the RLC entity that is not suspended. Further, a notification indicating that the PDCP data volume is "0" is output to the suspended RLC entity.

Note that, in the first operation example, an example has been described in which data is transmitted to the MCG when the SCG is deactivated without changing the RRC configuration. Specifically, an example in which the configuration of the primary path is not changed has been described. As a result, in the first operation example, the processing for changing the RRC configuration is not performed, the processing in the mobile communication system 1 can be reduced, and the delay of the processing can be reduced.

On the other hand, a second operation example described below is an example in which the RRC configuration is changed. Specifically, it is an example in which the configuration of the primary path is changed.

### (2-2) Second operation example

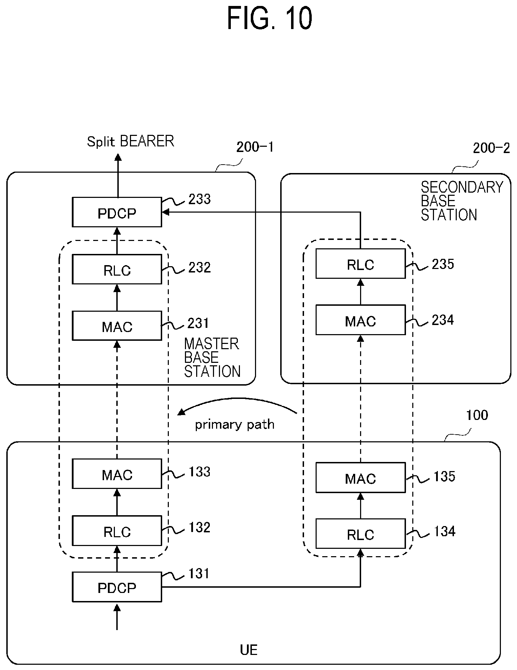

Fig. 10 is a diagram illustrating an establishment example of the split bearer according to the embodiment of the present disclosure.

Even in the example of Fig. 10, similarly to the first operation example, the dual connectivity is configured in the mobile communication system 1. Therefore, a path from the PDCP entity 131 to the PDCP entity 233 of the master base station 200-1 via the first RLC entity 132 is configured as the MCG. On the other hand, a path from the PDCP entity 131 of the UE 100 to the PDCP entity 233 of the master base station 200-1 via the second RLC entity 134 and the secondary base station 200-2 is configured as the SCG.

In the mobile communication system 1, the split bearer is also established. Further, in the mobile communication system 1, the primary path is configured on the SCG side.

In the second operation example, in a case where the SCG is deactivated in such a state, the master base station 200-1 configures (changes) the primary path from the SCG to the MCG.

Specifically, the master base station 200-1 is a master base station that is connected to the UE 100 together with the secondary base station 200-2 using the dual connectivity. The master base station 200-1 has the radio communicator 220 that receives the first data belonging to the split bearer from the UE 100 and receives the second data belonging to the split bearer from the UE 100 via the secondary base station 200-2. In addition, the master base station 200-1 has the controller 230 that performs, for the UE 100, the configuration for switching the primary path of the UE 100 from the secondary cell group to the master cell group managed by the master base station 200-1, when the secondary cell group managed by the secondary base station 200-2 is deactivated.

On the other hand, in the UE 100, when the secondary cell group is deactivated, the controller 130 switches the primary path from the secondary cell group to the master cell group managed by the master base station 200-1. Then, the PDCP entity 131 of the UE 100 outputs the PDCP data volume to the first RLC entity 132 that is the primary RLC entity, and outputs a notification indicating that the PDCP data volume is "0" to the second RLC entity 134 that is the split secondary RLC entity.

In addition, the PDCP entity 131 outputs the PDCP PDU to the first RLC entity 132 that is the primary RLC entity, and does not output the PDCP PDU to the second RLC entity 134 that is the split secondary RLC entity.

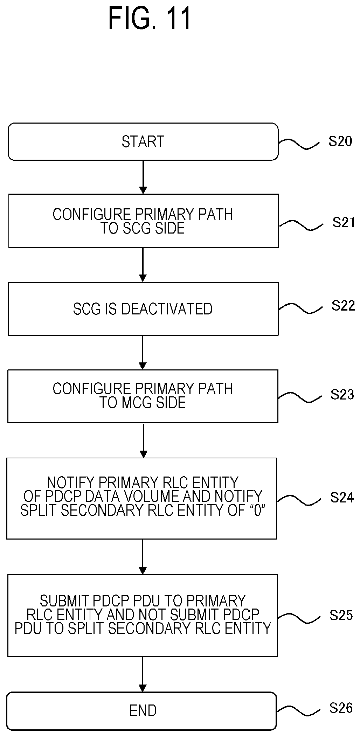

Fig. 11 is a diagram illustrating an operation example according to the embodiment of the present disclosure. It is assumed that the dual connectivity is configured in the UE 100 and the split bearer is also established in the UE 100, before processing of Fig. 11 is initiated.

In step S20, the mobile communication system 1 initiates the processing.

In step S21, the master base station 200-1 configures the primary path on the SCG side. For example, the controller 230 of the master base station 200-1 transmits an RRC message indicating that the primary path is configured on the SCG side to the UE 100.

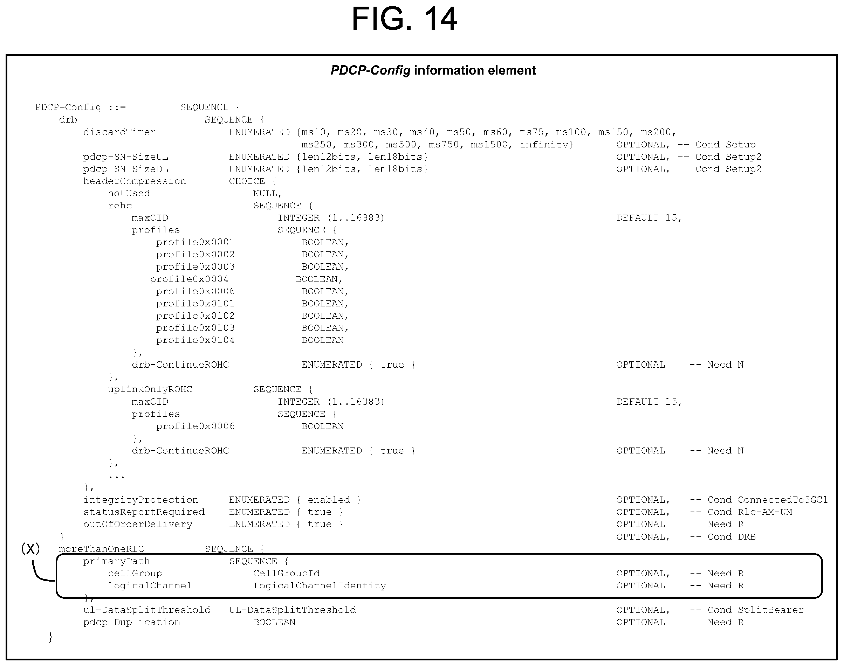

Fig. 14 is a diagram illustrating an example of information included in a message according to the embodiment of the present disclosure. Fig. 14 illustrates an example of an information element "PDCP-Config Information element" included in the RRC message. As illustrated in (X) of Fig. 14, the information element includes "PrimaryPath" as information element.

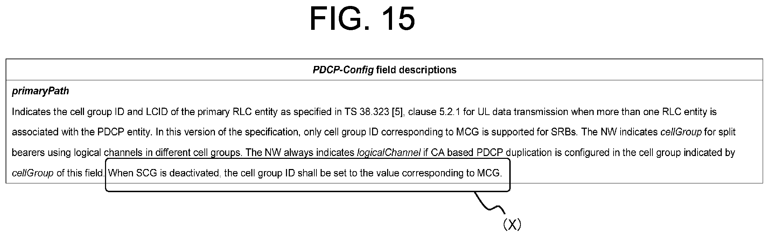

Fig. 15 is an explanatory diagram of "PrimaryPath". As described in a first sentence of Fig. 15, "PrimaryPath" represents an information element indicating the primary RLC entity among a plurality of RLC entities. The controller 230 of the master base station 200-1 designates the cell group ID and the LCID of the second RLC entity 134 as the primary RLC entity in "PrimaryPath". As a result, the SCG including the second RLC entity 134 can be configured in the primary path.

In the second operation example, as illustrated in (X) of Fig. 15, when the SCG is deactivated, "PrimaryPath" can include information for configuring the cell group ID corresponding to the MCG for the UE 100.

That is, the master base station 200-1 transmits the RRC message further including the "PDCP-Config Information element" including the "PrimaryPath" to the UE 100. Then, when the SCG is deactivated, the UE 100 can configure the primary path to the SCG according to the configuration illustrated in "PrimaryPath".

Note that the controller 130 of the UE 100 changes the first RLC entity 132 from the split secondary RLC entity to the primary RLC entity by the configuration of "PrimaryPath". On the other hand, the controller 130 changes the second RLC entity 134 from the primary RLC entity to the split secondary RLC entity by the configuring of "PrimaryPath".

Returning to Fig. 11, in step S22, the SCG is deactivated.

In step S23, the controller 130 of the UE 100 configures the primary path on the MCG side. As described above, the MCG is configured as the primary path according to the configuration of "PrimaryPath" included in the information element "PDCP-Config Information element" received in step S21.

In step S24, the PDCP entity 131 of the UE 100 outputs the PDCP data volume to the primary RLC entity (first RLC entity 132). Further, the PDCP entity 131 outputs a notification indicating that the PDCP data volume is "0" to the split secondary RLC entity (second RLC entity 134). As a result, similarly to the first operation example, even in the second operation example, the master base station 200-1 transmits the UL grant only to the MCG side of the UE 100.

In step S25, the PDCP entity 131 outputs the PDCP PDU to the primary RLC entity (first RLC entity 132). In addition, the PDCP entity 131 does not output the PDCP PDU to the split secondary RLC entity (second RLC entity 134).

Then, in step S26, the mobile communication system 1 ends a series of processing.

As described above, even in the second operation example, similarly to the first operation example, when the SCG is deactivated in a state where the split bearer is established in the UE 100, the UE 100 can appropriately transmit data to the MCG side.

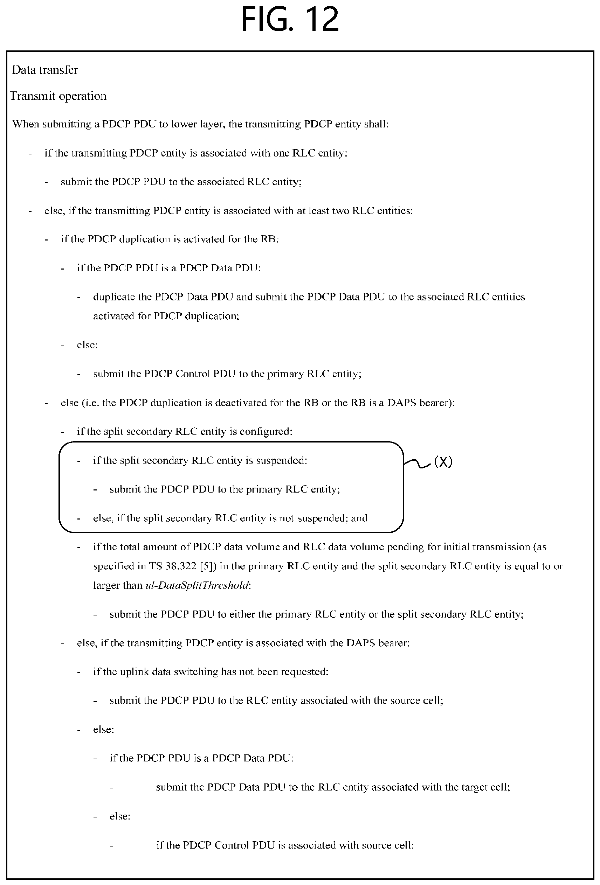

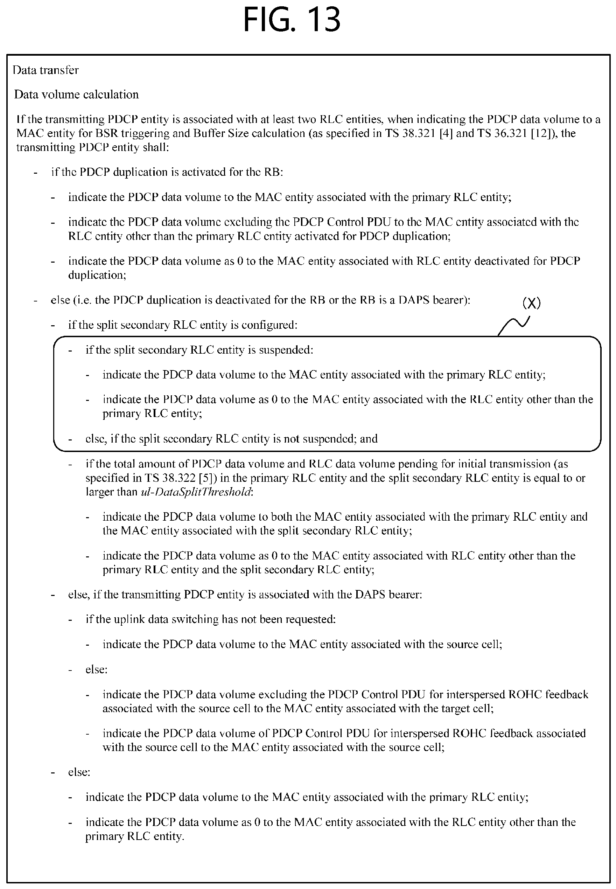

Figs. 12 and 13 are diagrams illustrating an operation example in the specification. Of these, Fig. 12 illustrates a transmission example of the PDCP PDU.

As illustrated in (X) of Fig. 12, when the split secondary RLC entity (for example, the second RLC entity 134) is suspended due to the deactivation of the SCG, the PDCP PDU is output (submitted) to the primary RLC entity (for example, the first RLC entity 132) that is not suspended. On the other hand, when the split secondary RLC entity is not suspended, the PDCP PDU is output to any one of the primary RLC entity and the split secondary RLC entity.

Fig. 13 illustrates a transmission example of the PDCP data volume. As illustrated in (X) of Fig 13, when the split secondary RLC entity is suspended due to the deactivation of the SCG, the PDCP data volume is indicated to the MAC entity associated with the primary RLC entity. On the other hand, the PDCP data volume being "0" is indicated to the MAC entity associated with the RLC entity (or the split secondary RLC entity) other than the primary RLC entity.

Further, when the split secondary RLC entity is not suspended and the total data volume of the PDCP data volume and the RLC data volume pending for initial transmission is suspended is equal to or more than the threshold, the PDCP data volume is output to both the primary RLC entity and the split secondary RLC entity.

### [Other Embodiments]

Each operation example described above is not limited to the case of being separately and independently performed, and each operation example can be appropriately combined and performed. Further, for example, the steps in the processing described in the present specification do not necessarily need to be executed in time series in the order described in the flowchart or the sequence diagram. For example, the steps in the processing may be executed in the order different from the order described as the flowchart or the sequence diagram, or may be executed in parallel. Also, some of the steps in the processing may be deleted, and further steps may be added to the processing.

Furthermore, for example, a method that includes the operation of one or more components of the apparatus described in the present specification may be provided, and a program for causing a computer to execute the operation of the components may be provided. The program may be recorded on a computer-readable medium. If the computer-readable medium is used, the program can be installed in the computer. Here, the computer-readable medium on which the program is recorded may be a non-transitory recording medium. The non-transitory recording medium is not particularly limited, but may be, for example, a recording medium such as a CD-ROM or a DVD-ROM. As an example of such a recording medium, there are the above-described memories 140 and 240.

Furthermore, a circuit that executes each processing to be performed by the UE 100 or the base station 200 may be integrated, and at least a part of the UE 100 or the base station 200 may be configured as a semiconductor integrated circuit (chipset or SoC).

Although the present disclosure has been described in accordance with examples, it is understood that the present disclosure is not limited to the examples and structures. The present disclosure also includes various modification examples and modifications within an equivalent range. In addition, various combinations and modes, and other combinations and modes including only one element, more elements, or less elements are also within the scope and idea of the present disclosure.

## Claims

1. A communication apparatus (100) that is connected to a master node (200-1) associated with a master cell group (MCG) and is connected to a secondary node (200-2) associated with a secondary cell group (SCG) using dual connectivity, the communication apparatus (100) comprising:
a controller (130) including a packet data convergence protocol (PDCP) entity (131) associated with a split bearer, a primary radio link control (RLC) entity (132) associated with the PDCP entity, and a secondary RLC entity (134) associated with the PDCP entity;
**characterized by** comprising
a receiver (120) configured to receive a radio resource control (RRC) message including information for configuring an ID of a cell group associated with the primary RLC entity, the ID of the cell group associated with the primary RLC entity being corresponding to the MCG, in a case where the SCG is deactivated, wherein
the PDCP entity (131) outputs a PDCP protocol data unit (PDU) to the primary RLC entity (132) in a case where a total volume of a PDCP data volume and an RLC data volume pending for initial transmission is smaller than a threshold.

2. The communication apparatus (100) according to claim 1, wherein
the PDCP entity (131) is configured to indicate the PDCP data volume to a media access control (MAC) entity associated with the primary RLC entity in a case where the total volume of the PDCP data volume and the RLC data volume pending for the initial transmission is smaller than the threshold.

3. The communication apparatus (100) according to claim 1, wherein
the receiver (120) is configured to receive the RRC message including information indicating the deactivation of the SCG.

4. A master node (200-1) that is associated with a master cell group (MCG) and is connected to a secondary node (200-2) associated with a secondary cell group (SCG) and a communication apparatus (100) using dual connectivity, the master node (200-1) comprising:
a controller (230) including a packet data convergence protocol (PDCP) entity (233) associated with a split bearer, a primary radio link control (RLC) entity (232) associated with the PDCP entity, and a secondary RLC entity (235) associated with the PDCP entity;
**characterized by** comprising
a transmitter (220) configured to transmit, to the communication apparatus (100), a radio resource control (RRC) message including information for configuring an ID of a cell group associated with the primary RLC entity, the ID of the cell group associated with the primary RLC entity being corresponding to the MCG, in a case where the SCG is deactivated.

5. The master node (200-1) according to claim 4, wherein
the transmitter (220) is configured to transmit, to the communication apparatus (100), the RRC message including information for configuring the deactivation of the SCG.

6. A communication control method in a communication apparatus (100) that is connected to a master node (200-1) associated with a master cell group (MCG) and is connected to a secondary node (200-2) associated with a secondary cell group (SCG) using dual connectivity, wherein the communication apparatus (100) includes a packet data convergence protocol (PDCP) entity (131), a primary radio link control (RLC) entity (132) associated with the PDCP entity, and a secondary RLC entity (134) associated with the PDCP entity,
the communication control method being **characterized by** comprising the steps of:
receiving a radio resource control (RRC) message including information for configuring an ID of a cell group associated with the primary RLC entity, the ID of the cell group associated with the primary RLC entity being corresponding to the MCG, in a case where the SCG is deactivated; and
causing the PDCP entity (131) to output a PDCP protocol data unit (PDU) to the primary RLC entity (132) in a case where a total volume of a PDCP data volume and an RLC data volume pending for initial transmission is smaller than a threshold.

7. The communication control method according to claim 6, further comprising the step of:
receiving the RRC message including information indicating the deactivation of the SCG.

## Patentansprüche

1. Kommunikationsvorrichtung (100), die mit einem Master-Knoten (200-1), der einer Master-Zellengruppe (MCG) zugeordnet ist, verbunden ist und unter Verwendung von Dual-Connectivity mit einem Sekundär-Knoten (200-2) verbunden ist, der einer Sekundär-Zellengruppe (SCG) zugeordnet ist, wobei die Kommunikationsvorrichtung (100) Folgendes umfasst:
eine Steuereinheit (130) mit einer Paketdatenkonvergenzprotokoll-(PDCP-)Entität (131), die einem Split-Bearer zugeordnet ist, einer primären Funkverbindungssteuer-(RLC-)Entität (132), die der PDCP-Entität zugeordnet ist, und einer sekundären RLC-Entität (134), die der PDCP-Entität zugeordnet ist;
**gekennzeichnet durch**:
einen Empfänger (120), der eingerichtet ist, um eine Funkressourcensteuer-(RRC-)Nachricht zu empfangen, die Informationen für eine Konfiguration einer ID einer der primären RLC-Entität zugeordneten Zellengruppe enthält, wobei die ID der der primären RLC-Entität zugeordneten Zellengruppe der MCG entspricht, in einem Fall, in dem die SCG deaktiviert ist, wobei
die PDCP-Entität (131) eine PDCP-Protokolldateneinheit (PDU) an die primäre RLC-Entität (132) ausgibt, in einem Fall, in dem ein Gesamtvolumen aus einem PDCP-Datenvolumen und einem RLC-Datenvolumen, das für eine Erstübertragung ansteht, kleiner als ein Schwellenwert ist.

2. Kommunikationsvorrichtung (100) nach Anspruch 1, wobei
die PDCP-Entität (131) eingerichtet ist, um das PDCP-Datenvolumen einer der primären RLC-Entität zugeordneten Medienzugriffssteuerungs-(MAC-)Entität mitzuteilen, in einem Fall, in dem das Gesamtvolumen aus dem PDCP-Datenvolumen und dem zur Erstübertragung anstehenden RLC-Datenvolumen kleiner als der Schwellenwert ist.

3. Kommunikationsvorrichtung (100) nach Anspruch 1, wobei
der Empfänger (120) eingerichtet ist, um die RRC-Nachricht zu empfangen, die Informationen enthält, die die Deaktivierung der SCG anzeigen.

4. Master-Knoten (200-1), der einer Master-Zellengruppe (MCG) zugeordnet ist und mit einem Sekundär-Knoten (200-2), der einer Sekundär-Zellengruppe (SCG) zugeordnet ist, sowie einer Kommunikationsvorrichtung (100) unter Verwendung von Dual-Connectivity verbunden ist, wobei der Master-Knoten (200-1) Folgendes umfasst:
eine Steuerung (230) mit einer Paketdatenkonvergenzprotokoll-(PDCP-)Entität (233), die einem Split-Bearer zugeordnet ist, einer primären Funkverbindungssteuer-(RLC-)Entität (232), die der PDCP-Entität zugeordnet ist, und einer sekundären RLC-Entität (235), die der PDCP-Entität zugeordnet ist;
**gekennzeichnet durch**:
einen Sender (220), der eingerichtet ist, um an die Kommunikationsvorrichtung (100) eine Funkressourcensteuer-(RRC-) Nachricht zu senden, die Informationen für eine Konfiguration einer ID einer der primären RLC-Entität zugeordneten Zellengruppe enthält, wobei die ID der der primären RLC-Entität zugeordneten Zellengruppe der MCG entspricht, in einem Fall, in dem die SCG deaktiviert ist.

5. Master-Knoten (200-1) nach Anspruch 4, wobei
der Sender (220) eingerichtet ist, um an die Kommunikationsvorrichtung (100) die RRC-Nachricht zu senden, die Informationen für eine Konfiguration der Deaktivierung der SCG enthält.

6. Kommunikationssteuerungsverfahren in einer Kommunikationsvorrichtung (100), die mit einem Master-Knoten (200-1), der einer Master-Zellengruppe (MCG) zugeordnet ist, verbunden ist und unter Verwendung von Dual-Connectivity mit einem Sekundär-Knoten (200-2) verbunden ist, der einer Sekundär-Zellengruppe (SCG) zugeordnet ist, wobei die Kommunikationsvorrichtung (100) eine Paketdatenkonvergenzprotokoll-(PDCP)-Entität (131), eine der PDCP-Entität zugeordnete primäre Funkverbindungssteuer-(RLC-)Entität (132) und eine der PDCP-Entität zugeordnete sekundäre RLC-Entität (134) umfasst,
wobei das Kommunikationssteuerungsverfahren **dadurch gekennzeichnet ist, dass** es folgende Schritte umfasst:
Empfangen einer Funkressourcensteuer-(RRC-)Nachricht, die Informationen für eine Konfiguration einer ID einer der primären RLC-Entität zugeordneten Zellengruppe enthält, wobei die ID der der primären RLC-Entität zugeordneten Zellengruppe der MCG entspricht, in einem Fall, in dem die SCG deaktiviert ist; und
Veranlassen der PDCP-Entität (131), eine PDCP-Protokolldateneinheit (PDU) an die primäre RLC-Entität (132) auszugeben, in einem Fall, in dem ein Gesamtvolumen aus einem PDCP-Datenvolumen und einem RLC-Datenvolumen, das für eine Erstübertragung ansteht, kleiner als ein Schwellenwert ist.

7. Kommunikationssteuerungsverfahren nach Anspruch 6, das ferner den folgenden Schritt umfasst:
Empfangen der RRC-Nachricht, die Informationen enthält, die die Deaktivierung der SCG angeben.

## Revendications

1. Appareil de communication (100) connecté à un nœud maître (200-1) associé à un groupe de cellules maître (MCG) et connecté à un nœud secondaire (200-2) associé à un groupe de cellules secondaire (SCG) en utilisant une double connectivité, l'appareil de communication (100) comprenant :
un contrôleur (130) comportant une entité de protocole de convergence de données par paquets (PDCP) (131) associée à un porteur scindé, une entité de contrôle de liaison radio (RLC) primaire (132) associée à l'entité PDCP, et une entité RLC secondaire (134) associée à l'entité PDCP ;
**caractérisé en ce qu'**il comprend
un récepteur (120) configuré pour recevoir un message de contrôle des ressources radio (RRC) comportant des informations pour configurer un identifiant d'un groupe de cellules associé à l'entité RLC primaire, l'identifiant du groupe de cellules associé à l'entité RLC primaire correspondant au MCG, dans un cas où le SCG est désactivé, dans lequel
l'entité PDCP (131) sort une unité de données de protocole PDCP (PDU) à l'entité RLC primaire (132) dans un cas où un volume total d'un volume de données PDCP et d'un volume de données RLC en attente de transmission initiale est inférieur à un seuil.

2. Appareil de communication (100) selon la revendication 1, dans lequel
l'entité PDCP (131) est configurée pour indiquer le volume de données PDCP à une entité de contrôle d'accès au support (MAC) associée à l'entité RLC principale dans un cas où le volume total du volume de données PDCP et du volume de données RLC en attente de transmission initiale est inférieur au seuil.

3. Appareil de communication (100) selon la revendication 1, dans lequel
le récepteur (120) est configuré pour recevoir le message RRC comportant des informations indiquant la désactivation du SCG.

4. Nœud maître (200-1) associé à un groupe de cellules maître (MCG) et connecté à un nœud secondaire (200-2) associé à un groupe de cellules secondaire (SCG) et à un appareil de communication (100) utilisant une double connectivité, le nœud maître (200-1) comprenant :
un contrôleur (230) comportant une entité de protocole de convergence de données par paquets (PDCP) (233) associée à un porteur scindé, une entité de contrôle de liaison radio (RLC) primaire (232) associée à l'entité PDCP, et une entité RLC secondaire (235) associée à l'entité PDCP;
**caractérisé en ce qu'**il comprend
un émetteur (220) configuré pour sortir, à l'appareil de communication (100), un message de contrôle des ressources radio (RRC) comportant des informations pour configurer un identifiant d'un groupe de cellules associé à l'entité RLC primaire, l'identifiant du groupe de cellules associé à l'entité RLC primaire correspondant au MCG, dans un cas où le SCG est désactivé.

5. Nœud maître (200-1) selon la revendication 4, dans lequel
l'émetteur (220) est configuré pour sortir, à l'appareil de communication (100), le message RRC comportant des informations pour configurer la désactivation du SCG.

6. Procédé de contrôle de communication dans un appareil de communication (100) connecté à un nœud maître (200-1) associé à un groupe de cellules maître (MCG) et connecté à un nœud secondaire (200-2) associé à un groupe de cellules secondaire (SCG) en utilisant une double connectivité, dans lequel l'appareil de communication (100) comporte une entité de protocole de convergence de données par paquets (PDCP) (131), une entité de contrôle de liaison radio (RLC) primaire (132) associée à l'entité PDCP, et une entité RLC secondaire (134) associée à l'entité PDCP,
le procédé de contrôle de communication étant **caractérisé en ce qu'**il comprend les étapes suivantes :
la réception d'un message de contrôle des ressources radio (RRC) comportant des informations pour configurer un identifiant (ID) d'un groupe de cellules associé à l'entité RLC primaire, l'identifiant du groupe de cellules associé à l'entité RLC primaire correspondant au MCG, dans un cas où le SCG est désactivé ; et
la provocation de l'entité PDCP (131) à sortir une unité de données de protocole PDCP (PDU) à l'entité RLC primaire (132) dans un cas où un volume total d'un volume de données PDCP et d'un volume de données RLC en attente de transmission initiale est inférieur à un seuil.

7. Procédé de contrôle de communication selon la revendication 6, comprenant en outre l'étape suivante :
la réception du message RRC comportant des informations indiquant la désactivation du SCG.
